(19) Europäisches Patentamt

European Patent Office

Office européen des brevets

(11) EP 0 654 724 B1

(12) FASCICULE DE BREVET EUROPEEN

(45) Date de publication et mention
de la délivrance du brevet:
**29.09.1999 Bulletin 1999/39**

(51) Int Cl.⁶: **G05D 23/19, A23L 3/22**

(21) Numéro de dépôt: **94402655.8**

(22) Date de dépôt: **21.11.1994**

(54) **Dispositif et procédé de chauffage par effet joule d'un fluide dans un tube formant résistance électrique**

Vorrichtung und Verfahren zur elektrischen Fluiderhitzung in einem Elektrowiderstandsrohr

Device and method for electric fluid heating in an electric-resistance pipe

(84) Etats contractants désignés:
AT BE CH DE DK ES FR GB GR IE IT LI LU MC NL PT SE

(30) Priorité: **19.11.1993 FR 9313897**

(43) Date de publication de la demande:
**24.05.1995 Bulletin 1995/21**

(73) Titulaire: **ELECTRICITE DE FRANCE**
**Service National**
**75008 Paris (FR)**

(72) Inventeur: **Bourgeois, Jean-François**
**F-77940 Flagy (FR)**

(74) Mandataire: **Gutmann, Ernest et al**
**Ernest Gutmann - Yves Plasseraud S.A.**
**3, rue Chauveau-Lagarde**
**75008 Paris (FR)**

(56) Documents cités:
WO-A-93/04421          GB-A- 2 150 716
GB-A- 2 151 050

## Description

La présente invention concerne un dispositif de chauffage d'un fluide par effet Joule du type comportant au moins un tube à passage de courant, des moyens d'alimentation électrique en puissance basse tension du tube, des moyens de mesure de la température du fluide en sortie du tube et des moyens de régulation électronique, ou régulateur, de la puissance basse tension en fonction de la température du fluide mesurée en sortie du tube et d'une température de consigne du fluide à respecter.

Elle concerne également un procédé de chauffage par effet Joule mettant en oeuvre un tel dispositif.

Le fluide à chauffer circulant à l'intérieur du tube, celui-ci joue donc à la fois le rôle d'un générateur de chaleur et celui de conducteur hydraulique.

L'invention trouve une application particulièrement importante bien que non exclusive dans le domaine du chauffage en continu des liquides pour l'industrie alimentaire, pharmaceutique ou cosmétique.

On connaît déjà des dispositifs de chauffage de fluide par tubes à passage de courant munis d'une régulation électronique de la puissance de type Proportionnel, Intégral, Dérivé (PID en abréviation).

Cette régulation présente des inconvénients car elle nécessite des réglages longs et difficiles. Elle se révèle de plus peu satisfaisante notamment lorsqu'il s'agit de chauffer des fluides particulièrement thermosensibles.

La présente invention vise à fournir un dispositif et un procédé de chauffage par effet Joule dans un tube à passage de courant, répondant mieux que ceux antérieurement connus aux exigences de la pratique, notamment en ce qu'elle propose de prendre en compte la température d'entrée du fluide, d'où une meilleure réponse aux perturbations et une meilleure qualité de traitement du fluide chauffé, et en ce qu'elle autorise une régulation de la température de peau du tube lui-même ce qui permet de limiter l'encrassement du tube et donc de retarder le nettoyage du dispositif, entraînant ainsi et notamment des gains de production.

Dans ce but, l'invention propose essentiellement un dispositif de chauffage d'un fluide par effet Joule du type ci-dessus défini, caractérisé en ce qu'il comporte de plus des moyens de mesure de la température du fluide à la sortie et à l'entrée du tube, des moyens de mesure du débit du fluide dans le tube et en ce que les moyens de régulation électronique de la puissance basse tension comportent un premier circuit correcteur commandé par lesdits moyens de mesure de la température du fluide à la sortie et à l'entrée du tube et par lesdits moyens de mesure du débit du fluide dans le tube.

Dans des modes de réalisation avantageux, on a de plus recours à l'une et/ou à l'autre des dispositions suivantes :

-    le premier circuit correcteur R1 est du type régulateur à réponse plate, dont une transformée de Laplace du modèle interne simulant le processus de chauffe est donnée par la formule :

$$H_1(p) = \frac{1}{1 + \tau p} \times \frac{\alpha}{p} \times \left( \frac{1}{1 + \tau_1 p} - \frac{\exp(-\tau_0 p)}{1 + \tau_2 p} \right)$$

où p : variable de Laplace

$\tau$ : constante de temps du capteur de température de sortie du fluide

$$\alpha = \frac{K}{\tau_0 + \tau_1 - \tau_2}$$

avec

K : gain statique du système en boucle ouverte,

$\tau_0$ : temps de parcours du fluide dans le tube,

$\tau_1$ et $\tau_2$ : paramètres de temps du système calculés à partir des caractéristiques géométriques et physiques du tube et des paramètres physiques du fluide à chauffer.

Le correcteur R1 est calculé comme suit :

$$H_1(p) = \frac{1}{1 + \tau p} \times \frac{\alpha}{p} \times \left( \frac{1}{1 + \tau_1 p} - \frac{\exp(-\tau_0 p)}{1 + \tau_2 p} \right)$$

Dans le cas particulier ou $\tau_1 = \tau_2$,

On pose :

$$C1 = \frac{4h_i}{\rho_f \, C_f \, d_i}$$

$$C2 = \frac{4}{l\pi \, \rho_m \, C_m \, (d_e^2 - d_i^2)}$$

$$C3 = \frac{4 \, di \, hi}{\rho m \, Cm \, (d_e^2 - d_i^2)}$$

On en déduit :

$$\alpha = \frac{C1 \times C2}{C1 + C3}$$

$$\tau_1 = \frac{1}{C1 + C3}$$

$$\tau_0 = \frac{1}{u_f} \times \left( 1 + \frac{C1}{C3} \right)$$

avec :

$h_i = 0{,}0234 \, R_e^{0,8} \, P_r^{0,4}$ (coefficient d'échange de la paroi interne du tube)

et $P_r = \rho_f \, C_f \, V_f / k_f$ (nombre de Prandtl.)

$R_e = u_f \, d_i / V_f$ (nombre de Reynolds)

Désignation des paramètres physiques :

Pour le tube :

$d_e$ : diamètre extérieur du tube.

$d_i$ : diamètre intérieur du tube.

$l$ : longueur du tube.

$\rho_m$ : masse volumique du tube.

$C_m$ : chaleur spécifique du tube.

Pour le fluide :

$\rho_f$ : masse volumique du fluide.

$C_f$ : chaleur spécifique du fluide.

$u_f$ : vitesse du fluide.

$V_f$ : viscosité cinématique du fluide.

On pose :

$H_1 (Z^{-1}) = Z [B_0(p) H_1(p)]$ (Transmittance en $Z^{-1}$ du modèle de régulation.)

$B_0(p)$ : bloqueur d'ordre zéro.

$$H_1 (Z^{-1}) = \frac{V (Z^{-1})}{U (Z^{-1})}$$

$$K_0 = \frac{1}{V(1)}$$

avec $V(1) = V(Z^{-1})$ pour $Z = 1$.

On en déduit le régulateur :

$$R1 (Z^{-1}) = \frac{K_0 \, U (Z^{-1})}{1 - K_0 \, V (Z^{-1})} = \frac{U1 (Z^{-1})}{\varepsilon_1 (Z^{-1})}$$

avec

U1 =    commande de puissance électrique.

$\varepsilon_1$ =    YCF - TFS (erreur de régulation)

On pose :

s =    25

Te =    partie entière de $\frac{\tau_0}{25}$        (période d'échantillonage)

$$K_0 = \frac{\alpha s}{\tau_1 - \tau} (\lambda_1 + \lambda_2 + \lambda_3)$$

$$\lambda_1 = \beta_1 - \beta_{10}$$

$$\lambda_2 = \beta_2 - \beta_{20} + \beta_{10} \exp(-Te/\tau_1) - \beta_1 \exp(-Te/\tau)$$

$$\lambda 3 = \beta_{20} \exp(-Te/\tau_1) - \beta_2 \exp(-Te/\tau)$$

$$\gamma_1 = - \exp(-Te/\tau_1) - \exp(-Te/\tau)$$

$$\gamma_2 = \exp(-Te/\tau_1 - Te/\tau)$$

$$\beta_1 = (Te - \tau_1 + \exp(-Te - \tau_1) \tau_1) \tau_1$$

$$\beta_2 = (-Te \exp(-Te/\tau_1) + \tau_1 - \exp(-Te/\tau_1) \tau_1) \tau_1$$

$$\beta_{20} = (Te \exp(-Te/\tau) + \tau - \exp(-Te/\tau)\tau) \tau$$

$$\beta_{10} = (Te - \tau + \text{esp}(-Te/\tau) \tau) \tau$$

D'où l'expression du régulateur :

$$R1(Z^{-1}) = \frac{K_0 (\tau_1-\tau)(1 + \gamma_1 Z^{-1} + \gamma_2 Z^{-2})}{(\tau_1-\tau)-K_0\alpha(1+Z^{-1}+...+Z^{-s+1})(\lambda_1 Z^{-1}+\lambda_2 Z^{-2}+\lambda_3 Z^{-3})}$$

dont l'équation de récurrence est programmée.

- le dispositif comporte de plus une pompe d'alimentation du tube à débit variable, et des moyens de mesure de la température de peau du tube, les moyens de régulation électronique de la puissance basse tension comportant un second circuit correcteur de contrôle de la température de peau du tube, et de commande du débit de ladite pompe en fonction d'une valeur seuil de température déterminée de peau dudit tube ;

- le second circuit correcteur R2 est agencé pour présenter un modèle de régulation de fonction de transfert :

$$H_2(p) = \frac{K_s}{(1 + \tau'_1 p) \times (1 + \tau'_2 p)} = \frac{\theta p}{D}$$

avec

p : variable de Laplace

$K_s$ : une constante fonction de la température de peau du tube

D : Débit du fluide

$\theta p$ : température de peau du tube

$\tau'_1 = k \tau_0$
avec $\tau_0$ : temps de parcours du fluide dans le tube
et $2 \leq k \leq 10$
$\tau'_2 = k' \tau'_1$ avec $2 \leq k' \leq 10$

Le régulateur R2 est calculé comme suit :

$$R2 (p) = \frac{K (1+ Ti p) (1+ Td p)}{Ti p}$$

On pose

Ti = $\tau'1$ (constante de temps d'intégrale)

Td = r'2 (constante de temps de dérivée)

$$K = \frac{2}{Ks} \text{ (gain statique du régulateur)}$$

sachant que :

$$H_2\,(p) = \frac{Ks}{(I + \tau'_1 p)\,(1+\tau'_2 p)} = \frac{U2\,(p)}{Tp\,(p)}$$

(Transmittance en p entre la commande de débit et la température de paroi)

TO : temps de parcours du fluide dans le tube
$\tau'_1$ : 5 T 0
$\tau'_2$ : T 0 / 2

$$K_s = \frac{P}{I\,\pi\,d_i\,Kh_i\,D^{1,8}}$$

P : puissance installée en w.

D : Débit du fluide en l/s

$$Kh_i = 0{,}0234\,(d_i/V_f)^{0,8}\,\frac{4}{\pi.3{,}6.10^6.d_i^{2}}^{0,8}\,p_r^{0,4}\,k_f/d_i$$

R2 (p) est ensuite discrétisé et programmé.

- la période d'échantillonnage $T_e$ est donnée par la formule : $T_e = \tau_0/K_e$
  avec $\tau_0$ : temps de parcours du fluide dans le tube et $15 \le K_e \le 25$ ;
- pour tenir compte des variations de débit, le dispositif comporte des moyens de calcul agencés pour calculer, à l'aide d'une relation linéaire, les nouvelles commandes du régulateur et le modèle interne correspondant au nouveau débit et dès l'instant d'échantillonnage suivant la variation, pour calculer la nouvelle valeur de puissance correspondant au nouveau débit ;
- pour tenir compte des variations de température d'entrée du fluide, le dispositif comporte des moyens de filtrage de la température mesurée avec une constante de temps du premier ordre de l'ordre de $\tau_0$, et des moyens de calcul agencés pour calculer, à l'aide d'une relation linéaire, les nouvelles commandes correspondant à la nouvelle température d'entrée du fluide et pour calculer la nouvelle valeur de puissance correspondant à cette nouvelle température.

L'invention propose également un procédé réalisant les étapes de mesure et de calcul mises en oeuvre par le dispositif décrit ci-dessus.

L'invention sera mieux comprise à la lecture de la description des modes de réalisation de l'invention donnés ci-après à titre d'exemple non limitatif.

La description se réfère aux dessins qui l'accompagnent dans lesquels :

- La figure 1 est un schéma de principe d'un tube à passage de courant appartenant à un dispositif selon l'invention, montrant les principaux points de mesure des paramètres de fonctionnement du dispositif.
- La figure 2 est un schéma de principe d'un dispositif selon l'invention.
- Les figures 3 et 4 montrent deux modes de réalisation schématiques de régulateur et de système de tubes à passage de courant appartenant à un dispositif selon l'invention.

- La figure 5 est un organigramme général du fonctionnement de la régulation selon le mode de réalisation de l'invention plus particulièrement décrit ici.
- Les figures 6 à 11 montrent des courbes donnant les variations des paramètres de fonctionnement d'un dispositif selon l'invention dans diverses configurations de réglage et faisant apparaître notamment les avantages importants de l'invention.

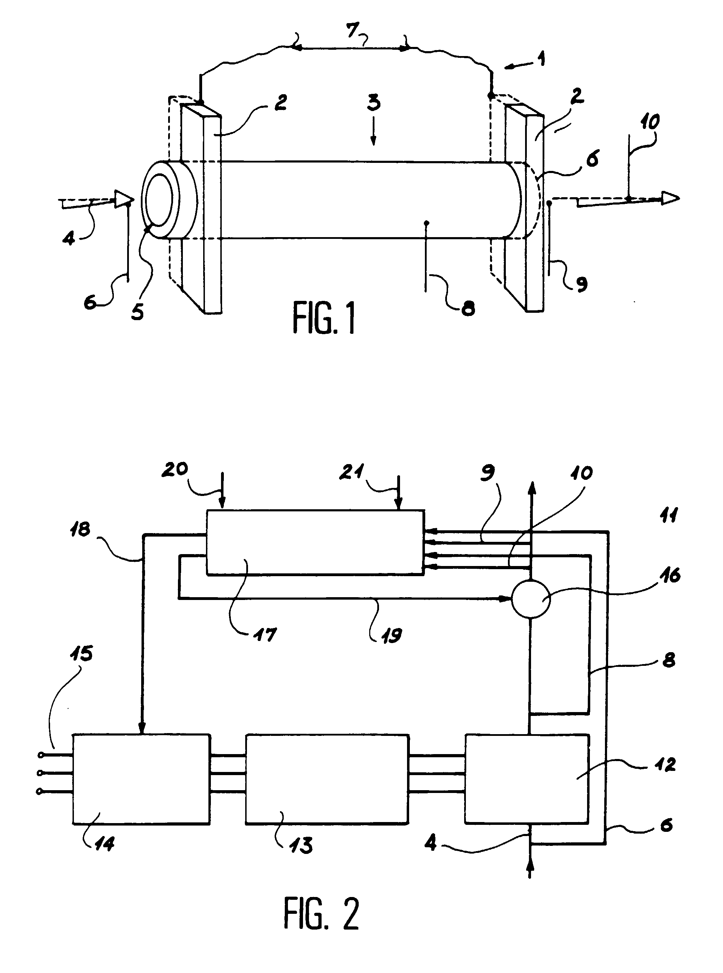

La figure 1 montre un tube 1 à passage de courant en acier inoxydable, agencé pour être mis sous basse tension par exemple entre environ 15 V et 60 V, par exemple avec une puissance d'alimentation comprise entre 10 KW et 100 KW, via deux brides 2 fixées de façon ajustable sur le tube et situées à distance l'une de l'autre.

Le tube 1 crée donc une résistance électrique entre les deux brides 2, ce qui provoque un échauffement thermique par effet Joule dans la zone 3 du tube située entre les deux brides. Le fluide 4, par exemple un produit thermosensible comme de la moutarde dont la pasteurisation s'effectue à 74° ± 2°C, est injecté froid dans le tube en 5. Il est ensuite chauffé dans la zone 3 et ressort chaud en 6.

On a par ailleurs représenté sur la figure 1 les points de mesure des paramètres de fonctionnement du dispositif, à savoir la température d'entrée du fluide ($\theta_e$) en 6, la puissance de l'alimentation électrique entre brides (U) en 7, la température de peau du tube ($\theta$p) en 8, la température de sortie du fluide ($\theta$s) en 9 et le débit (D) en 10.

Les capteurs de température utilisés sont de type connu en soi, par exemple des thermocouples pour des débits rapides (supérieurs à 1m/s) ou des sondes platine pour des débits plus lents. Le débit est quant-à-lui mesuré par exemple via un débitmètre électromagnétique.

On a représenté sur la figure 2 un dispositif 11 selon le mode de réalisation de l'invention plus particulièrement décrit ici.

On utilisera dans la suite et quand il y a lieu, les mêmes numéros de référence pour désigner les mêmes éléments.

Le dispositif comprend un tube ou un système de tubes 12 à passage de courant, par exemple constitué par trois serpentins hélicoïdaux disposés hydrauliquement en série et électriquement en étoile.

L'alimentation électrique du système de tubes est par exemple assurée par un transformateur basse tension 13 piloté au primaire par un modulateur 14 triphasé à angle de phase, alimenté en 380 V en 15.

Le dispositif 11 comprend de plus une pompe 16 à vitesse variable connue en elle-même, d'actionnement du fluide 4 alimentant le système 12.

Le dispositif 11 comprend également un régulateur 17 relié aux points de mesures 6, 8, 9 et 10 d'entrée des données. Ce régulateur actionne, respectivement via les liaisons 18 et 19, d'une part le modulateur 14 et d'autre part la pompe 16, de façon à respecter une première température de consigne (YCF) du fluide en sortie du système 12, et une deuxième température de consigne (YCP) de peau de tube, lesdites consignes étant respectivement introduites dans le régulateur en 20 et 21 par exemple par un opérateur.

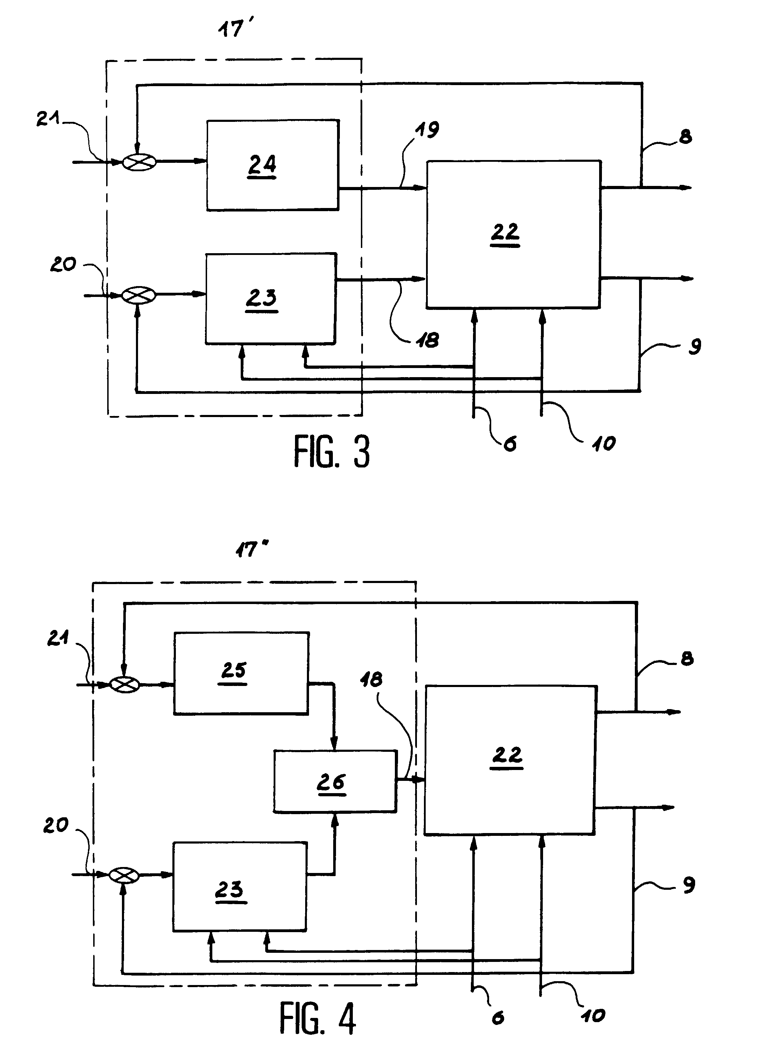

La figure 3 montre en trait mixte un premier mode de réalisation 17' du régulateur 17, connecté au système réchauffeur 22 qui comprend les tubes 12 et les éléments 13 et 14 d'alimentation basse tension.

Le régulateur 17' comporte un premier circuit correcteur 23 dit à réponse plate, c'est-à-dire présentant un temps de réponse minimal avec suppression des oscillations cachées. Le circuit 23 est agencé pour contrôler la température de sortie du fluide ($\theta_s$) par l'intermédiaire de la puissance électrique (U).

Selon l'invention, les réglages s'adaptent aux fluctuations du débit (D) et de la température d'entrée ($\theta_e$) du fluide, grâce à la mise en oeuvre d'une régulation adaptative préprogrammée.

De façon plus précise, le premier circuit 23 comprend par exemple un calculateur du type IBM PS 30 avec bus MCA ou AT, programmés avec les lois de commandes de la régulation de la température de sortie du fluide. L'interface avec le système réchauffeur 22 est réalisée par des cartes d'entrée-sortie, par exemple fabriquées par la société américaine DATA TRANSLATION sous la référence DT-2801. Ces cartes sont placées à l'intérieur du boîtier calculateur et réalisent les conversions analogiques-numériques nécessaires.

Ces cartes sont elles-même reliées à un bornier externe sur lequel sont connectés des modules de remise en forme des signaux, modules agencés pour permettre également l'isolement galvanique entre les capteurs et les cartes, isolation nécessaire puisque les capteurs peuvent être sous tension, notamment dans le cas du capteur de la mesure de la température de paroi.

On va maintenant décrire plus précisément le modèle interne du premier circuit correcteur 23 du régulateur 17'.

Pour ce faire, on a cherché à représenter linéairement le processus du type entrée-sortie mis en jeu, la température du fluide en sortie du réchauffeur ($\theta_s$) étant le paramètre de sortie, et la puissance de chauffe (U) basse tension étant le paramètre d'entrée du premier circuit.

Le mode de réalisation du modèle interne du système simulé par le circuit 23 selon l'invention est, comme on l'a vu, donné par la formule (représentation par transmittance) :

$$H(p) = \frac{1}{1 + \tau p} \times \frac{\alpha}{p} \times \left( \frac{1}{1 + \tau_1 p} - \frac{\exp(-\tau_0 p)}{1 + \tau_2 p} \right) \qquad (1)$$

où

p : variable de Laplace

$\tau$ : constante de temps du capteur de température de sortie du fluide

$$\alpha = \frac{K}{\tau_0 + \tau_1 - \tau_2}$$

avec K : gain statique du système en boucle ouverte,
$\tau_0$ : temps de parcours du fluide dans le tube,
$\tau_1$ et $\tau_2$ étant les deux paramètres de temps du système modélisé calculés à partir des caractéristiques géométriques et physiques du tube, et des paramètres physiques du fluide à chauffer. Ces calculs sont à la portée de l'homme du métier, une fois les hypothèses posées et l'invention décrite comme ci-dessus.

Les paramètres géométriques et physiques du tube pris en compte pour le calcul de r1 et r2 sont notamment : le nombre de tubes à passage de courant du réchauffeur 22 à considérer (s'il y a des tubes en parallèle), la longueur des tubes, les diamètres interne et externe des tubes ainsi que la masse volumique du matériau constitutif des tubes à la température moyenne de fonctionnement.

Les paramètres du fluide pris en compte sont : la viscosité, la conductivité thermique du fluide, la chaleur massique et la masse volumique du fluide à une température intermédiaire entre la température d'entrée ($\theta_e$) du fluide (en général la température ambiante) et la température de sortie ($\theta_s$).

Le calcul du circuit correcteur 23, de fonction R(z), est effectué directement à partir de H(z), transmittance en Z du modèle interne décrit ci-dessus [voir formule (1)] de la façon suivante :

Sachant que :

$$J(z) = Z\,[B0(p) \times H(p)] \qquad (2)$$

avec

$$B0(p) = \frac{1 - \exp(-T_e p)}{p} \qquad (3)$$

$T_e$ étant la période d'échantillonnage (fréquence des traitements) ;

Et que :

$$J(z) = \frac{V(z)}{U(z)} \qquad (4)\,; \qquad K_0 = \frac{1}{V(1)}$$

U étant le numérateur de la fonction de transfert en z du modèle interne
V étant le dénominateur de la fonction de transfert en z du modèle interne

Il vient :

$$R(z) = \frac{K_0 \times U(z)}{1 - K0 \times V(z)} \qquad (5)$$

Après détermination de R(z), la programmation de la loi de commande peut être effectuée aisément par l'homme du métier à l'aide d'équations récurrentes, la température de consigne (YCF) étant introduite en 20 dans le régulateur (voir figure 3).

Avantageusement on choisit par ailleurs une période d'échantillonnage $T_e = \tau_0/20$ (avec $\tau_0$ = temps de parcours du fluide dans le tube) ce qui, de façon surprenante permet d'améliorer encore les performances du correcteur qui vient d'être décrit.

De plus, dans un mode avantageux de réalisation, en se basant sur la connaissance du surplus de puissance à accorder en cas d'augmentation de débit, on va pouvoir modifier le contenu de la mémoire du régulateur en fonction d'une variation incontrôlée de débit, ce qui améliore ici encore les performances de la régulation. Pour ce faire, lors de la détection d'une variation de débit, on commence par calculer les nouvelles commandes correspondant au nouveau débit à l'aide d'une relation linéaire.

Dès l'instant d'échantillonnage suivant la perturbation, le régulateur calcule alors la nouvelle valeur de puissance correspondant à ce nouveau débit.

Il s'ensuit une diminution importante de la sensibilité du dispositif aux perturbations de débit, et ce dans un rapport de l'ordre de un à dix.

Le dispositif peut également être agencé pour mieux réagir aux variations de température d'entrée.

Pour ce faire, on modifie comme précédemment la mémoire du régulateur à l'aide d'une relation linéaire. Cette modification n'est pas faite de façon immédiate lors de la détection de la perturbation, mais avec une constante de temps de l'ordre de $\tau_0$.

Le régulateur 17' comprend par ailleurs un second circuit correcteur 24 agencé pour tenir compte des phénomènes d'encrassement du tube, et pour agir sur le débit (D) en conséquence.

Pour ce faire, l'action du circuit correcteur 24 reste peu dynamique, les variations lentes de débit étant prises en compte par le circuit 23.

La fonction de transfert du modèle de régulation du second circuit 24 est comme on l'a vu donnée par la formule :

$$H_2(p) = \frac{K_s}{(1 + \tau'_1 p) \text{ x } (1 + \tau'_2 p)} = \frac{\theta p}{D} \qquad (6)$$

avec

p :    variable de Laplace
$K_s$ :    constante fonction de la température de peau du tube
$\theta p$ :    température de peau du tube
D :    Débit du fluide

$\tau'_1 = k\,\tau_0$
avec $\tau_0$ : temps de parcours du fluide dans le tube
et $2 \leq k \leq 10$
$\tau'_2 = k'\,\tau'_1$ avec $2 \leq k' \leq 10$

Pour résoudre le problème de dynamique mentionné ci-dessus, les inventeurs imposent ainsi une dynamique plus lente, mais dominante pour la régulation.

La commande du débit est donc filtrée par un premier ordre dont la constante de temps $\tau'_1$ est reliée linéairement à $\tau_0$, par exemple $\tau'_1 = 5 \text{ x } \tau_0$.

La dynamique propre, maintenant négligeable devant le terme $\tau'_1$ est alors modélisée de façon grossière également par une relation de premier ordre, par exemple de constante de temps $\tau'_2 = \tau_0/2$.

Pour cela on choisit un régulateur PID que l'on met sous la forme :

$$D(p) = \frac{K(1 + Tip)\,(1 + Tdp)}{Tip} \qquad (7)$$

On choisit :

Ti = $\tau'_1$ (action aux basses fréquences)
Td = $\tau'_2$

On obtient :

$$F(p) = \frac{KKs\theta_p}{Ti\, p} \quad \text{en boucle ouverte} \tag{8}$$

$$F(p) = \frac{1}{1 + \dfrac{Ti}{KKs\theta_p}p} \quad \text{en boucle fermée} \tag{9}$$

Le système se comporte donc comme un premier ordre de constante de temps.

$$\tau BF = \frac{Ti}{KKs\theta_p} \tag{10}$$

On peut donc imposer la dynamique du système en choisissant K :

$$K = \frac{Ti}{\tau BF\; Ks\theta_p} \tag{11}$$

On choisit par ailleurs $\tau BF$ en fonction de la constante de temps de filtrage du débit, par exemple : $\tau BF = \tau_1'/2$

On utilise alors un régulateur PID programmé avec une structure parallèle, chacune des actions étant saturée comme il convient.

La figure 4 montre un autre mode de réalisation selon l'invention d'un dispositif avec un régulateur 17" (en trait mixte), mais cette fois-ci sans possibilité d'action sur le débit.

Le régulateur 17" comprend un circuit 23 comme décrit ci-dessus, et un circuit 25 complémentaire. Ce circuit ne permet pas de tenir compte du problème d'encrassement mais va agir comme une sécurité.

En effet tant que la température de peau reste en dessous de la consigne, le circuit 25 reste inactif. Dès que la température de peau dépasse sa consigne, le circuit 25 diminue la puissance et la température de peau est stabilisée sur la consigne via le circuit 26.

Le modèle interne du circuit 25 présente la fonction de transfert suivante :

$$H3(p) = \frac{K_s\, R_3}{(1 + \tau_1 p)\,(1 + \tau_2 p)} \tag{12}$$

Les valeurs de $\tau 1$ et $\tau 2$ ont été calculées [cf. H(p)].

Pour le calcul du gain statique KSR3 on utilise :

$$P = hi\, S\, (\theta p - \theta s) \tag{13}$$

P :     puissance totale transmise au tube

hi :     coefficient d'échange entre le fluide et le tube

S :     surface totale d'échange

On peut donc en déduire le gain statique KSR3 à partir de la transmittance ou :

$$\theta p = \theta s + \frac{P}{hi\, S} \tag{14}$$

$$\frac{\theta p}{P} = \frac{\theta s}{P} + \frac{1}{hi\, S} \tag{15}$$

On a donc :

$$KsR3 = Ks + \frac{1}{hi\,S} \qquad (16)$$

On a ainsi obtenu un modèle linéaire du second ordre dans lequel on cherche à compenser les pôles. Pour cela on choisit un régulateur PID que l'on met sous la forme :

$$D(p) = \frac{K(1 + tip)(1 + Tdp)}{Tip} \qquad (17)$$

On choisit :

Ti = $\tau$1 (action aux basses fréquences)
Td = $\tau$2

On obtient :

$$F(p) = \frac{KKsR3}{Ti\,p} \text{ en boucle ouverte} \qquad (18)$$

$$F(p) = \frac{1}{1 + \dfrac{Ti}{KKsR3}p} \text{ en boucle fermée} \qquad (19)$$

Le système se comporte donc comme un premier ordre de constante de temps :

$$\tau BF = \frac{Ti}{KKsR3} \qquad (20)$$

On peut donc imposer la dynamique du système en choisissant K :

$$K = \frac{Ti}{\tau BF\,KsR3} \qquad (21)$$

On choisit par ailleurs ici encore $\tau$BF en fonction de la plus grande constante de temps du modèle, par exemple : $\tau$BF = $\tau$ 1.

Pour la programmation, on utilise le PID déjà utilisé mentionné précédemment.

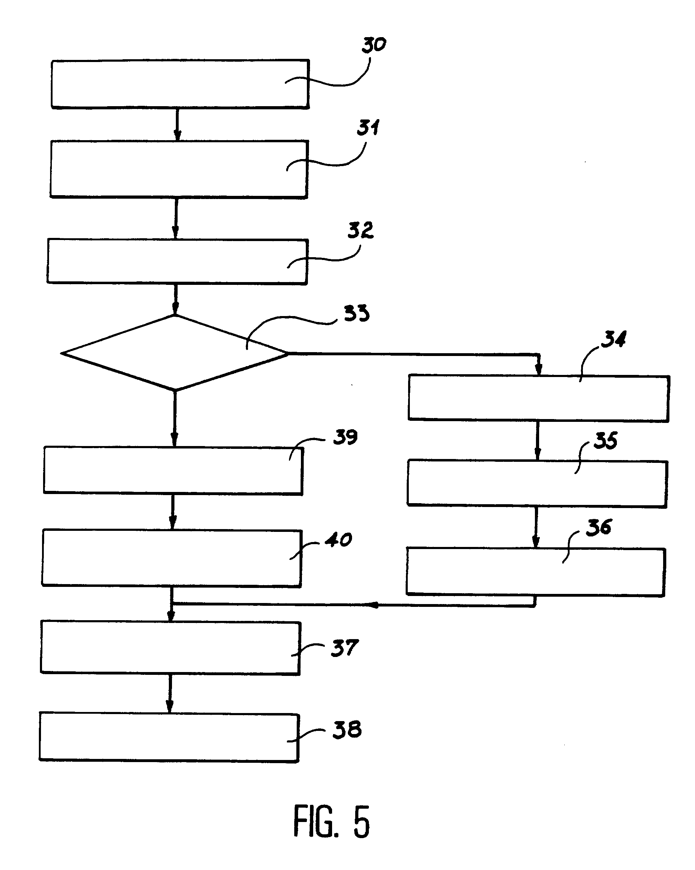

On a représenté sur la figure 5 un organigramme général de fonctionnement d'un dispositif selon l'invention.

La première étape 30 est une étape d'acquisition des données (mesures et consignes).

Puis on calcule à l'étape 31 le modèle interne, et on effectue le calcul de régulation du circuit 23 (étape 32).

En cas de commande possible du débit (choix 33), le circuit 24 est actionné (étape 34), puis on filtre le débit (étape 35) dont on effectue le calcul (étape 36) avant réactualisation de la mémoire en 37 et commande de la puissance en 38.

En cas d'absence de régulation sur le débit, le circuit de régulation de paroi 25 est par contre activé (étape 39) et la commande de sécurité décrite ci-avant sur la température minimum de paroi actionnée en 40.

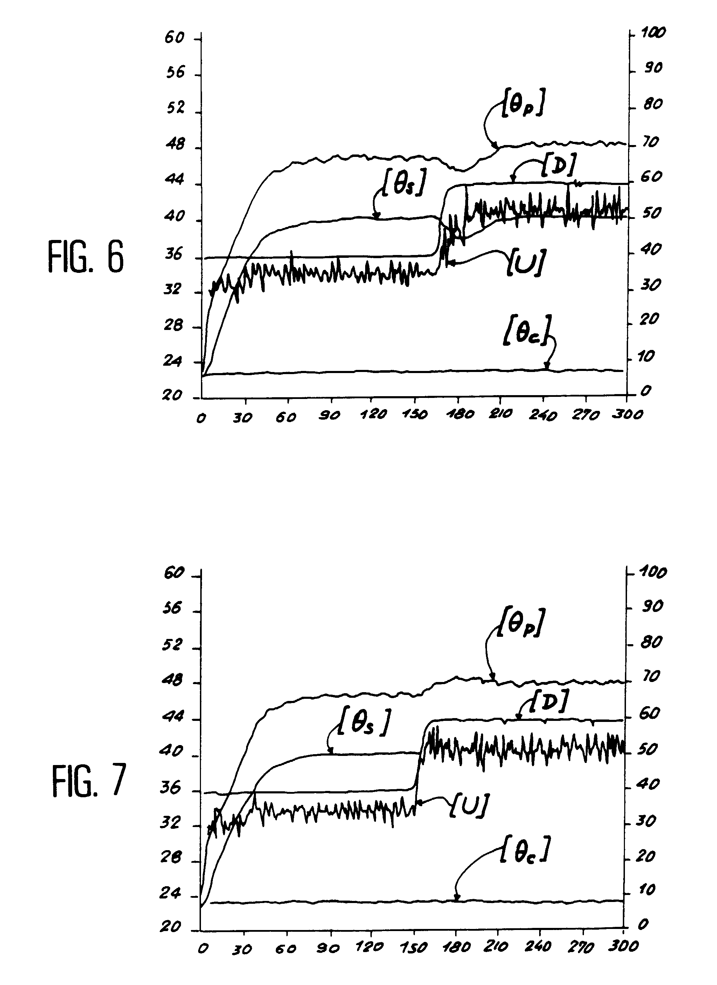

A titre d'exemple on a représenté sur les figures 6 à 11 les résultats obtenus avec un dispositif selon l'invention dont la partie chauffante 12 est constituée de trois serpentins hélicoïdaux disposés hydrauliquement en série et électriquement en étoile, l'alimentation électrique étant assurée par un transformateur 380/48V.

Le fluide utilisé est de l'eau adoucie, la pompe doseuse étant utilisable sur une plage de 50 à 4000 l/h.

Chaque figure montre les courbes suivies par les cinq paramètres $\theta_e$, $\theta_s$, U, D et $\theta_p$.

Les figures 6 et 7 représentent tout d'abord la réponse de la température de sortie ($\theta_s$) à une variation de débit de 2000 à 3000 l/h, sans anticipation et avec anticipation de cette variation. L'amélioration est nette, la variation de $\theta_s$ passant de 3°C à ± 1°C. On peut noter également que la structure du régulateur impose une montée en température jusqu'à la consigne (YCF = 40°C), sans dépassement ni oscillation.

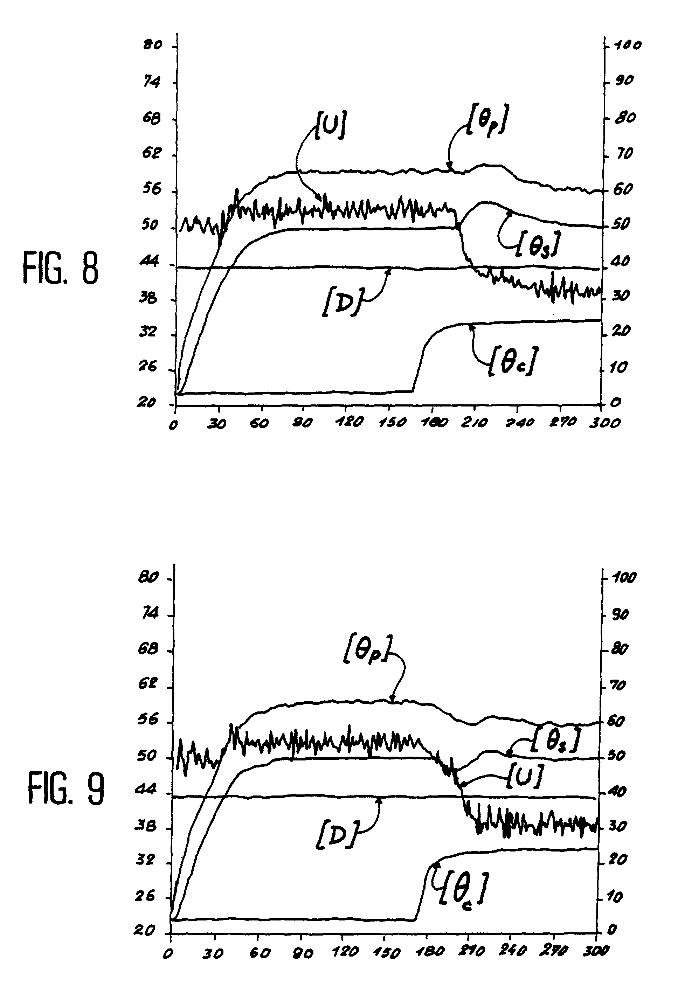

Les figures 8 et 9 représentent la réponse de la température de sortie ($\theta_s$) à une variation de la température d'entrée du fluide, de 22°C à 34°C, sans anticipation et avec anticipation de cette variation. L'excursion de $\theta_s$, passe de + 5°C à ± 2°C.

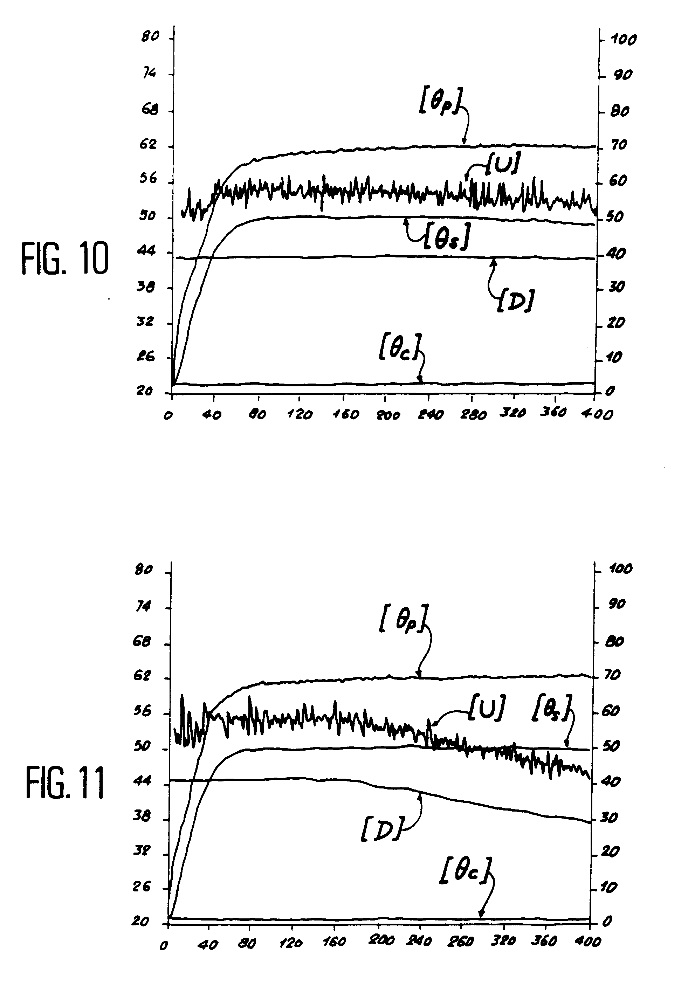

Les figures 10 et 11 représentent quant-à-elles la réponse de la température de sortie ($\theta_s$) à un encrassement

progressif du tube, sans action sur le débit et avec action sur le débit, sachant ici que la température de peau du tube est régulée à sa valeur limite de 62°C. Sur la figure 10, lorsque $\theta_p$ atteint sa valeur limite (62°C), la puissance décroît et la température de sortie ($\theta_s$) ne peut plus être respectée car la régulation sur $\theta_p$ devient prioritaire. Sur la figure 11 lorsque $\theta_p$ atteint sa valeur limite, la puissance décroît pour respecter la consigne YCP (62°C) et simultanément le débit décroît pour que $\theta_s$ se maintienne à la consigne YCF.

**Revendications**

1. Dispositif (11) de chauffage d'un fluide par effet Joule comportant au moins un tube (1, 12) à passage de courant, des moyens (13, 14, 15) d'alimentation électrique en puissance basse tension U du tube caractérisé en ce qu'il comprend :

   - des moyens de mesure de la température du fluide à la sortie et à l'entrée du tube,
   - des moyens (10) de mesure du débit D du fluide dans le tube et
   - des moyens (17, 17', 17") de régulation électronique de la puissance basse tension en fonction de la température du fluide et d'une température de consigne YCF du fluide à respecter, lesdits moyens comportant un premier circuit (23) correcteur commandé par lesdits moyens de mesure de la température du fluide à la sortie et à l'entrée du tube et par lesdits moyens de mesure du débit du fluide dans le tube,

   en ce que le premier circuit correcteur (23) est du type régulateur à réponse plate, basé sur une transformée de Laplace du modèle interne simulant le processus de chauffe et utilisant la température de sortie du fluide, le temps de parcours du fluide dans le tube, et des paramètres de temps du système calculés à partir des caractéristiques géométriques et physiques du tube et des paramètres physiques du fluide à chauffer,
   et en ce que les moyens (17') de régulation électronique de la puissance basse tension comportent un second circuit correcteur (24) de contrôle de la température de peau du tube.

2. Dispositif selon la revendication 1, caractérisé en ce qu'une transformée de Laplace du modèle interne simulant le processus de chauffe est donnée par la formule :

$$H_{1}(p) = \frac{1}{1 + \tau p} \times \frac{\alpha}{p} \times \left( \frac{1}{1 + \tau_1 p} - \frac{\exp(-\tau_0 p)}{1 + \tau_2 p} \right)$$

où

p : variable de Laplace

$\tau$ : constante de temps du capteur de température de sortie du fluide

$$\alpha = \frac{K}{\tau_0 + \tau_1 - \tau_2}$$

avec

K : gain statique du système en boucle ouverte,
$\tau_0$ : temps de parcours du fluide dans le tube,
$\tau_1$ et $\tau_2$ : paramètres de temps du système calculés à partir des caractéristiques géométriques et physiques du tube et des paramètres physiques du fluide à chauffer.

3. Dispositif selon l'une quelconque des revendications précédentes, caractérisé en ce qu'il comporte de plus une pompe (16) d'alimentation du tube à débit variable et des moyens de mesure de la température $\theta_p$ de peau du tube, et en ce que le second circuit correcteur (24) de contrôle de la température de peau du tube commande le débit de ladite pompe en fonction d'une valeur seuil de température YCP déterminée de peau dudit tube.

4. Dispositif selon la revendication 3, caractérisé en ce que le second circuit correcteur (24) est agencé pour présenter un modèle de régulation de la fonction de transfert :

$$H_2(p) = \frac{Ks}{(1 + \tau'_1 p) x (1 + \tau'_2 p)} = \frac{\theta p}{D}$$

avec

p : variable de Laplace
$K_s$ : une constante fonction de la température de peau du tube
D : Débit du fluide
$\theta p$ : température de peau du tube

$\tau'_1 = k\tau_0$
avec $\tau_0$ : temps de parcours du fluide dans le tube
et $2 \le k \le 10$
$\tau'_2 = k'\tau'_1$ avec $2 \le k' \le 10$

5. Dispositif selon l'une quelconque des revendications précédentes, caractérisé en ce que la période d'échantillonnage $T_e$ est donnée par la formule : $T_e = \tau_0/Ke$ avec $\tau_0$ : temps de parcours du fluide dans le tube et $15 \le K_e \le 25$.

6. Dispositif selon l'une quelconque des revendications précédentes, caractérisé en ce que pour tenir compte des variations de débit, le dispositif (11) comporte des moyens (17) de calcul agencés pour calculer, à l'aide d'une relation linéaire, des nouvelles commandes du régulateur et le modèle interne correspondant au nouveau débit et dès l'instant d'échantillonnage suivant la variation, pour calculer la nouvelle valeur de puissance correspondant au nouveau débit.

7. Dispositif selon l'une quelconque des revendications précédentes, caractérisé en ce que, pour tenir compte des variations de température d'entrée du fluide, le dispositif (11) comporte des moyens de filtrage de la température mesurée avec une constante de temps du premier ordre de l'ordre de $\tau_0$, des moyens (17) de calcul agencés pour calculer, à l'aide d'une relation linéaire, les nouvelles commandes correspondant à la nouvelle température d'entrée du fluide et pour calculer la nouvelle valeur de puissance correspondant à cette nouvelle température, $\tau_0$ étant le temps de parcours du fluide dans le tube.

8. Procédé de chauffage d'un fluide par effet Joule dans au moins un tube (1) à passage de courant, dans lequel on régule électroniquement la température du fluide en agissant sur la puissance basse tension à partir de mesures de la température du fluide effectuées à la sortie dudit tube et d'une valeur de consigne à respecter, caractérisé en ce que on corrige la régulation par la température du fluide effectuée à l'entrée du tube et par le débit dudit fluide, ladite correction étant basée sur un modèle interne du système de chauffe dont une transformée de Laplace est donnée par la formule :

$$H(p) = \frac{1}{1 + \tau p} \, x \, \frac{\alpha}{p} \, x \, \left( \frac{1}{1 + \tau_1 p} - \frac{\exp(-\tau_0 p)}{1 + \tau_2 p} \right)$$

où

p : variable de Laplace

$\tau$ : constante de temps du capteur de température de sortie du fluide

$$\alpha = \frac{K}{\tau_0 + \tau_1 - \tau_2}$$

avec

K : gain statique du système en boucle ouverte,
$\tau_0$ : temps de parcours du fluide dans le tube,
$\tau_1$ et $\tau_2$ : paramètres de temps du système calculés à partir des caractéristiques géométriques et physiques du tube et des paramètres physiques du fluide à chauffer.

9. Procédé selon la revendication 8, caractérisé en ce que on corrige de plus le débit d'alimentation du fluide pour tenir compte de l'encrassement du tube à partir de la mesure de la température de peau du tube, ladite correction présentant la fonction de transfert :

$$H_2(p) = \frac{Ks}{(1 + \tau'_1 p) x (1 + \tau'_2 p)} = \frac{\theta p}{D}$$

avec

p : variable de Laplace
$K_s$ : une constante fonction de la température de peau du tube
$\theta p$ : température de peau du tube
D : Débit du fluide

$\tau'_1 = k\tau_0$
avec $\tau_0$ : temps de parcours du fluide dans le tube
et $2 \le k \le 10$
$\tau'_2 = k'\tau'_1$ avec $2 \le k' \le 10$

10. Procédé selon l'une quelconque des revendications 8 et 9, caractérisé en ce que la période d'échantillonnage Te est donnée par la formule Te = $\tau_0$/Ke, avec $\tau_0$ : temps de parcours du fluide dans le tube et $15 \le Ke \le 25$.

**Patentansprüche**

1. Vorrichtung (11) zur Erhitzung eines Fluids durch Stromwärme mit mindestens einem Rohr (1, 12) zur Hindurchleitung von Strom und Einrichtungen (13, 14, 15) zur Versorgung des Rohrs mit Leistung niedriger Spannung U, gekennzeichnet durch:

Einrichtungen zur Fluid-Temperaturmessung am ein- und am ausgangsseitigen Ende des Rohrs,
Einrichtungen (10) zur Messung der Fluid-Durchsatzmenge D im Rohr und
Einrichtungen (17, 17', 17") zur elektronischen Regelung der Niedrigspannungsleistung in Abhängigkeit von der Fluid-Temperatur und der einzuhaltenden Fluid-Solltemperatur YCF, wobei diese Einrichtungen eine über die Einrichtungen zur Messung der Fluidtemperatur am ein- und ausgangsseitigen Ende des Rohrs und die Einrichtungen zur Messung der Fluid-Durchsatzmenge im Rohr gesteuerte erste Korrekturschaltung (23) umfassen,
dass die erste Korrekturschaltung (23) als auf der Grundlage einer den Erhitzungsprozess simulierenden Laplace-Transformation in Form eines internen Modells arbeitenden Reglers mit flacher Ansprechcharakteristik vorgesehen ist, der sich als Parameter der Fluid-Ausgangstemperatur, der Zeit des Fluid-Durchsatzes durch das Rohr und der auf der Basis der geometrischen und physikalischen Eigenschaften des Rohrs sowie der physikalischen Eigenschaften des zu erhitzenden Fluids errechneten Systemzeit bedient, und
dass die Einrichtungen (17') zur elektronischen Regelung der Niedrigspannungsleistung eine zweite Korrekturschaltung (24) zur Steuerung der Oberflächentemperatur des Rohrs aufweisen.

2. Vorrichtung nach Anspruch 1, dadurch gekennzeichnet, dass die den Erhitzungsprozess simulierende Laplace-Transformation eines internen Modells gegeben ist durch die Formel:

$$H_1(p) = \frac{1}{1 + \tau p} \times \frac{\alpha}{p} \times \left( \frac{1}{1 + \tau_1 p} - \frac{\exp(-\tau_0 p)}{1 + \tau_2 p} \right)$$

wobei:

p = Laplace-Variable

$\tau =$     Zeitkonstante Messfühler zur Erfassung der ausgangsseitigen Fluidtemperatur

$$\alpha = \frac{K}{\tau_0 + \tau_1 - \tau_2}$$

wobei $K$ die statische Verstärkung des offenen Regelsystems, $\tau_0$ die Fluid-Durchgangszeit durch das Rohr sowie $\tau_1$ und $\tau_2$ auf der Basis der geometrischen und physikalischen Eigenschaften des Rohrs sowie der physikalischen Eigenschaften des zu erhitzenden Fluids errechnete Systemzeitparameter bedeuten.

3. Vorrichtung nach irgendeinem der vorstehenden Ansprüche, dadurch gekennzeichnet, dass diese eine regelbare Pumpe (16) zur Beschickung des Rohrs sowie Einrichtungen zur Messung der Rohr-Oberflächentemperatur $\theta p$ aufweist und dass die zweite Korrekturschaltung (24) zur Steuerung der Rohr-Oberflächentemperatur die Förderleistung der Pumpe in Abhängigkeit von einem vorgegebenen Oberflächentemperatur-Schwellenwert YCP des Rohrs regelt.

4. Vorrichtung nach Anspruch 3, dadurch gekennzeichnet, dass die zweite Korrekturschaltung (24) konzipiert ist zur Darbietung eines Regelmodells der Übergangsfunktion:

$$H_2(p) = \frac{Ks}{(1 + \tau'_1 p) x (1 + \tau'_2 p)} = \frac{\theta_p}{D}$$

wobei:

$p =$     Laplace-Variable
$Ks =$     Konstantfunktion der Rohroberflächentemperatur
$D =$     Fluid-Durchsatzmenge
$\theta p =$     Rohroberflächentemperatur
$\tau'_1 =$     $k\tau_0$

wobei:

$\tau_0 =$     Fluid-Durchgangszeit durch das Rohr und $2 \leq k \leq 10$
$\tau'_2 =$     $K'\tau'_1$ mit $2 \leq k' \leq 10$ bedeuten.

5. Vorrichtung nach irgendeinem der vorstehenden Ansprüche, dadurch gekennzeichnet, dass der Probennahmezeitraum $T_e$ gegeben ist durch die Formel $T_e = \tau_0/K_e$, wobei $\tau_0$ die Fluiddurchgangszeit durch das Rohr und $15 \leq K_e \leq 25$ bedeuten.

6. Vorrichtung nach irgendeinem der vorstehenden Ansprüche, dadurch gekennzeichnet, dass zur Berücksichtigung von Durchsatzschwankungen die Vorrichtung (11) Rechnereinrichtungen (17) aufweist, die über eine lineare Relation dem neuen Durchsatz entsprechende neue Befehle des Reglers und das interne Modell ab dem Moment der Probennahme nach der Schwankung einen der neuen Durchsatzmenge entsprechenden neuen Leistungswert errechnen.

7. Vorrichtung nach irgendeinem der vorstehenden Ansprüche, dadurch gekennzeichnet, dass zur Berücksichtigung von Schwankungen der Fluid-Eingangstemperatur die Vorrichtung (11) Einrichtungen zum Filtern der gemessenen Temperatur mit einer Zeitkonstante erster Ordnung von $\tau_0$ und Rechnereinrichtungen (17) zum Berechnen von der jeweils neuen Fluid-Eingangstemperatur entsprechenden neuen Befehlen über eine lineare Relation sowie des dieser jeweils neuen Temperatur entsprechenden neuen Leistungswerts aufweist, wobei $\tau_0$ die Fluid-Durchgangszeit durch das Rohr darstellt.

8. Verfahren (11) zur Erhitzung eines Fluids durch Stromwärme mit mindestens einem Rohr (1) zur Hindurchleitung von Strom, bei dem ausgehend von Fluid-Temperaturmessungen am ausgangsseitigen Ende des Rohrs und einem einzuhaltenden Sollwert die Fluid-Temperatur durch Einwirken auf die Niedrigspannungsleistung geregelt wird, dadurch gekennzeichnet, dass die Korrektur der Regelung über die Fluid-Temperatur an der Rohr-Eingangsseite und die Fluid-Durchsatzmenge erfolgt und auf einem internen Modell des Erhitzungssystems basiert, dessen Laplace-Transformierte gegeben ist durch die Formel:

$$H(p) = \frac{1}{1 + \tau p} \times \frac{\alpha}{p} \times \left(\frac{1}{1 + \tau_1 p} - \frac{\exp(-\tau_0 p)}{1 + \tau_2 p}\right)$$

wobei:

p = Laplace-Variable

$\tau$ = Zeitkonstante des Messfühlers zur Erfassung der ausgangseitigen Fluidtemperatur

$$\alpha = \frac{K}{\tau_0 + \tau_1 - \tau_2}$$

wobei K die statische Verstärkung des offenen Regelsystems, $\tau_0$ die Fluid-Durchgangszeit durch das Rohr und $\tau_1$ und $\tau_2$ auf der Basis der geometrischen und physikalischen Eigenschaften des Rohrs und der physikalischen Eigenschaften des zu erhitzenden Fluids errechnete Systemzeitparameter bedeuten.

9. Verfahren nach Anspruch 8, dadurch gekennzeichnet, dass ausserdem zur Berücksichtigung der Rohrverschmutzung ausgehend vom Messwert der Rohroberflächentemperatur die Fluid-Zufuhrmenge korrigiert wird, wobei die Korrektur die nachstehende Übergangsfunktion hat:

$$H_2(p) = \frac{Ks}{(1 + \tau'_1 p) \times (1 + \tau'_2 p)} = \frac{\theta p}{D}$$

wobei:

p = Laplace-Variable
Ks = Konstantfunktion der Rohroberflächentemperatur
$\theta p$ = Rohroberflächentemperatur
D = Fluid-Durchsatzmenge

$\tau'_1 = k\tau_0$
wobei:

$\tau_0$ = Fluid-Durchgangszeit durch das Rohr und
$2 \leq K \leq 10$
$\tau'_2$ = $k'\tau'_1$ mit $2 \leq k' \leq 10$.

10. Verfahren nach einem der Ansprüche 8 und 9, dadurch gekennzeichnet, dass die Probennahmezeit Te gegeben ist durch die Formel Te $= \tau_0/$Ke, wobei $\tau_0$ = Fluid-Durchgangszeit durch das Rohr und $15 \leq$ Ke $\leq 25$ ist.

## Claims

1. A device (11) for heating a fluid by the Joule effect, the device comprising at least one tube (1, 12) for passing electricity, and means (13, 14, 15) for feeding the tube with electrical power at low voltage U, the device being characterized

in that it comprises:

- means for measuring the temperature of the fluid at the outlet and at the inlet of the tube;
- means (10) for measuring the flow rate D of fluid in the tube; and
- means (17, 17', 17") for electronically regulating the low voltage power as a function of the temperature of the fluid and a reference temperature YCF to be complied with by the fluid, said means including a first corrector circuit (23) controlled both by said means for measuring the temperature of the fluid at the outlet and at the inlet of the tube and by said means for measuring the flow rate of the fluid in the tube;

in that the first corrector circuit (23) is of the flat response regulator type based on a Laplace transform of the internal model simulating the heating process and using the outlet temperature of the fluid, the travel time of the fluid along the tube, and time parameters of the system calculated on the basis of the geometrical and physical characteristics of the tube and the physical characteristics of the fluid to be heated; and
in that the means (17') for electronically regulating the low voltage power comprise a second corrector circuit (24) for controlling the skin temperature of the tube.

2. A device according to claim 1, characterized in that the Laplace transform of the internal model simulating the heating process is given by the following formula:

$$H_1(p) = \frac{1}{1 + \tau p} \times \frac{\alpha}{p} \times \left( \frac{1}{1 + \tau_1 p} - \frac{\exp(-\tau_0 p)}{1 + \tau_2 p} \right)$$

where:

p is the Laplace variable;
$\tau$ is the time constant of the fluid outlet temperature sensor; and

$$\alpha = \frac{K}{\tau_0 + \tau_1 - \tau_2}$$

where:

K is the open loop stack gain of the system;
$\tau_0$ is the travel time of the fluid along the tube; and
$\tau_1$ and $\tau_2$ are time parameters of the system calculated on the bsis of the geometrical and physical characteristics of the tube and the physical parameters of the fluid to be heated.

3. A device according to either preceding claim, characterized in that it further includes a pump (16) for feeding the tube at a variable flow rate and means for measuring the temperature $\theta_p$ of the skin of the tube, and in that the second corrector circuit (24) for controlling the temperature of the skin of the tube controls the flow rate of said pump as a function of a determined temperature threshold value YCP for the skin of said tube.

4. A device according to claim 3, characterized in that the second corrector circuit (24) is organized to present a regulation model having the following transfer function:

$$H_2(p) = \frac{K_s}{(1 + \tau'_1 p) \times (1 + \tau'_2 p)} = \frac{\theta_p}{D}$$

where:

p is the Laplace variable;
$K_s$ is a constant that is a function of the skin temperature of the tube;
D is the flow rate of the fluid;
$\theta_p$ is the skin temperature of the tube; and
$\tau'_1 = k\tau_0$

where:

$\tau_0$ is the travel time of the fluid in the tube, and $2 \leq k \leq 10$; and

$\tau'_2 = k'\tau'_1$ with $2 \leq k' \leq 10$.

5. A device according to any preceding claim, characterized in that the sampling period $T_e$ is given by the formula: $T_e = \tau_0/K_e$ where $\tau_0$ is the travel time of the fluid in the tube and $15 \leq K_e \leq 25$.

6. A device according to any preceding claim, characterized in that in order to take account of flow rate variations, the device (11) includes calculation means (17) organized to use a linear relationship to calculate new commands for the regulator and the internal model corresponding to the new flow rate, and as from the sampling instant following the variation, to calculate the new power value corresponding to the new flow rate.

7. A device according to any preceding claim, characterized in that in order to take account of variations in the inlet temperature of the fluid, the device (11) includes means for filtering the measured temperature with a first order time constant of the same order as $\tau_0$, and calculation means (17) organized to use a linear relationship to calculate new commands corresponding to the new fluid inlet temperature, and to calculate the new power value corresponding to said new temperature, $\tau_0$ being the travel time of the fluid along the tube.

8. A method of heating a fluid by the Joule effect in at least one electricity-passing tube (1), in which the temperature of the fluid is regulated electronically by acting on low voltage power on the basis of measurements of the temperature of the fluid performed at the outlet of said tube and of a reference value to be complied with, the method being characterized in that the regulation is corrected by the temperature of the fluid taken at the inlet of the tube and by the flow rate of said fluid, said correction being based on an internal model of the heater system having a Laplace transform given by the formula:

$$H_1(p) = \frac{1}{1 + \tau p} \times \frac{\alpha}{p} \times \left( \frac{1}{1 + \tau_1 p} - \frac{\exp(-\tau_0 p)}{1 + \tau_2 p} \right)$$

where:

p is the Laplace variable;
$\tau$ is the time constant of the fluid outlet temperature sensor; and

$$\alpha = \frac{K}{\tau_0 + \tau_1 - \tau_2}$$

where:

K is the open loop stack gain of the system;
$\tau_0$ is the travel time of the fluid along the tube; and
$\tau_1$ and $\tau_2$ are time parameters of the system calculated on the bsis of the geometrical and physical characteristics of the tube and the physical parameters of the fluid to be heated.

9. A method according to claim 8, characterized in that the fluid feed rate is also corrected to take account of tube clogging on the basis of a measurement of the skin temperature of the tube, said correction having the following transfer function:

$$H_2(p) = \frac{K_s}{(1 + \tau'_1 p) \times (1 + \tau'_2 p)} = \frac{\theta_p}{D}$$

where:

p is the Laplace variable;
$K_s$ is a constant that is a function of the skin temperature of the tube;
D is the flow rate of the fluid; and

$\theta p$ is the skin temperature of the tube

$\tau'_1 = k\tau_0$

where:

$\tau_0$ is the travel time of the fluid in the tube and $2 \le k \le 10$; and

$\tau'_2 = k'\tau'_1$ with $2 \le k' \le 10$.

**10.** A method according to claim 8 or 9, characterized in that the sampling period $T_e$ is given by the formula $T_e = \tau_O / K_e$ with $\tau_0$ being the travel time of the fluid in the tube, and $15 \le K_e \le 25$.

FIG. 1

FIG. 2

FIG. 3

FIG. 4

FIG. 5

FIG. 6

FIG. 7

FIG. 8

FIG. 9

FIG. 10

FIG. 11